# EUROPEAN PATENT SPECIFICATION

(11) **EP 4 147 815 B1**
(45) Date of publication and mention of the grant of the patent: **19.06.2024**
(21) Application number: 21196286.5
(22) Date of filing: 13.09.2021
(51) Int. Cl.: B23K 9/20, B23K 9/32

(54) **PROTECTIVE GAS MOUTHPIECE, JOINING DEVICE AND JOINING METHOD**
SCHUTZGASMUNDSTÜCK, VERBINDUNGSVORRICHTUNG UND VERBINDUNGSVERFAHREN
EMBOUT DE GAZ DE PROTECTION, DISPOSITIF D'ASSEMBLAGE ET PROCÉDÉ D'ASSEMBLAGE

(43) Date of publication of application: 15.03.2023
(73) Proprietor: Newfrey LLC, New Britain, CT 06053 (US)
(72) Inventor: Ivo, Hubert, 35394 Gießen (DE); Nab, Nicolas, 35394 Gießen (DE)
(74) Representative: SBD IPAdmin

(56) References cited:
- EP-A1- 3 266 551
- DE-U1-202004 019 394
- US-A1- 2017 361 391

## Description

The present invention relates to a protective gas (also known as a shield gas, purge gas, or inert gas) mouthpiece for a joining device, the protective gas mouthpiece being designed for supplying a protective gas during a connection process between a fastener and a workpiece and comprising a base member partially defining an axial opening and a mouth arranged around the opening and which can be placed onto a workpiece, wherein the adjacent to the mouth defines a cleaning space in which the protective gas can be introduced and which, when the connection process is carried out, is axially delimited by the workpiece which covers the opening, see claim 1.

The present invention further relates to a joining device having a connection element retention device and such protective gas mouthpiece which surrounds the connection element retention device, see claim 11.

Finally, the present invention relates to a method for carrying out a joining process using such, protective gas by means of the protective gas mouthpiece, see claim 12.

Protective gas mouthpieces are often used in joining processes in the form of the so-called stud welding. This welding method serves to weld stud-like fasteners or other components to workpieces. In this instance, the preferred method is so-called arc stud welding in which there is drawn between a fastener (for example, a weld stud) and a workpiece an arc which melts opposing connection faces. Finally, the fastener is connected to the workpiece in order in this manner to short-circuit the arc and to interrupt the weld current, which leads to cooling of the entire melt and consequently to a connection between the fastener and workpiece.

In order to improve the joining process, it is known during said joining process to arrange around the fastener and the arc a protective gas mouthpiece into which a protective gas is introduced in order to displace ambient gas (for example, air) present inside the mouthpiece.

DE 20 2004 001 667 discloses a protective gas mouth-piece for arc stud welding, wherein the mouthpiece has a body with a hollow space which has at least two openings. A movement device, in particular a welding device, can engage through a first opening. At a second opening, a connection element may be placed on a workpiece. The second opening may in this instance be substantially closed when the connection element is placed on the workpiece. Furthermore, a gas supply for supplying protective gas is provided in the hollow space, and a gas discharge for discharging protective gas supplied from the hollow space. The gas discharge during a welding operation is intended in this instance to substantially correspond to the first opening.

EP3266551A1 (basis for the preamble of claims 1, 11 and 12) from the applicant is directed to protective gas mouthpiece for a connection device, such as a welding machine, having a base member which has an axial opening and a mouth which is arranged around the opening and which can be placed on a workpiece on which a connection process is intended to be carried out, wherein the opening adjacent to the mouth defines a cleaning space in which protective gas can be introduced and which, when a connection process is carried out, can be axially delimited by the workpiece which covers the opening. Three protective gas supply channels are directed into the cleaning space such that a main flow direction of the protective gas in a radial centre of the cleaning space is orientated in a substantially radial and unidirectional manner.

A continuous need exists to improve the construction and geometry of such protective gas mouthpieces. It is notably an object of the present application to provide a protective gas mouthpiece with reduced interfering contours allowing a better control of the gas flow and thus an improved joint after the joining process.

To this aim, according to the invention, it is provided a protective gas mouthpiece according to claim 1. The shape of the base member with the flattened portion allows a compact gas mouthpiece adapted to be used in narrow installation spaces. Besides, the flattened portion combined with the geometry of the channels with the bent portions allow a better flow of the gas during the joining process, such that unwanted gas streams are avoided. The geometry of the channel reduces interference contours.

In an embodiment, the protective gas mouthpiece comprises exactly four protective gas supply channels. This number of protective gas supply channels allows a better orientation of the protective gas main flow. In an embodiment, the outlets of the first and fourth gas supply channels are diametrically opposed. They thus blow protective gas diametrically into the cleaning space and meet in the radial centre of the cleaning space.

In an embodiment, the base member comprises a median plan and the first and second gas supply channels are in mirror symmetry with the third and fourth gas supply channels along the median plan. This mirror symmetry combined with the peripheral portion without any outlet allows an orientation of the protective gas flow adapted to quickly reach an entire joining surface, thus avoiding blind spots or inequal repartition of the protective gas flow.

In an embodiment, the distribution chamber is connected to a unique entry port through which protective gas can be supplied. It is thereby possible for the protective gas to be able to be supplied to a central location on the protective gas mouthpiece. On the mouthpiece there is consequently produced, a particularly compact construction. In addition, the accessibility and maintenance is simplified in the region of the mouthpiece.

In an embodiment, a resistance element is arranged in the distribution chamber, and wherein the resistance element covers all the inlets. The resistance element increases flow resistance in the region of the inlets of the protective gas supply channels. For example, such a flow resistance element may be formed by means of a sintered element or by means of a metal grid or mesh, or an open-pored metal foam or the like. The resistance element creates a back pressure (or dynamic pressure) which ensures that the gas flows off evenly into all the protective gas supply channels. For such back pressure, a sintered element is particularly advantageous. The resistance element may have a square or frustoconical shape.

In an embodiment, the base member comprises a first part and a second part, the second part being removably connected to the first part, wherein the second part is adapted to be placed onto a workpiece and to connect the workpiece, wherein the gas supply channels are arranged in the first part. For instance, a snap fit connection or a press fit connection may be realized between the first and second parts. The part in contact with the workpiece is subject to wear and contamination. The removable connection allows to replace the front part (the second part) only, without replacing the entire mouthpiece.

In an embodiment, the first part is made by 3D-printing. The gas supply channels can thus have complex geometries which improve the protective gas flow and which cannot be reached by conventional manufacturing methods.

According to the present invention, the base member has a frustoconical shape with a notch opposite the flattened portion.

In an embodiment, the inlets are arranged on a segment of the flattened portion, on the same plane, and wherein the segment is smaller than one fourth of the length of the flattened portion in said plane. In an embodiment, the length of the distribution chamber around longitudinal axis is sensibly the same than the length of the segment. This improves the compactness of the mouthpiece. The inlets are all arranged on a reduced portion of the base member such that they can easily be supplied with a distribution chamber having a reduced area.

The current application is also directed to a joining device for performing a joining process between a fastener and a workpiece comprising a connection element retention device and a protective gas mouthpiece as described above, wherein the protective gas mouthpiece surrounds the retention device.

Finally, the application is directed to a method for carrying out a welding process using protective gas by means of a protective gas mouthpiece as described above, comprising the steps of:
- axially placing a protective gas mouthpiece on a workpiece, wherein inside the protective gas mouthpiece a connection element is arranged so as to be able to be axially offset with respect to the protective gas mouthpiece
- raising the connection element from the workpiece so that an intermediate space is released between the connection element and the workpiece
- supplying protective gas to the intermediate space.

Other characteristics and advantages of the invention will readily appear from the following description of embodiments, provided as non-limitative examples, in reference to the accompanying drawings.

In the drawings:
Fig. 1 is a perspective view of a joining device with, in dotted line, a protective gas mouthpiece according to the prior art.
Fig. 2 is a perspective view of the protective gas mouthpiece of the invention with a base member, a gas distribution member and protective gas supply channels.

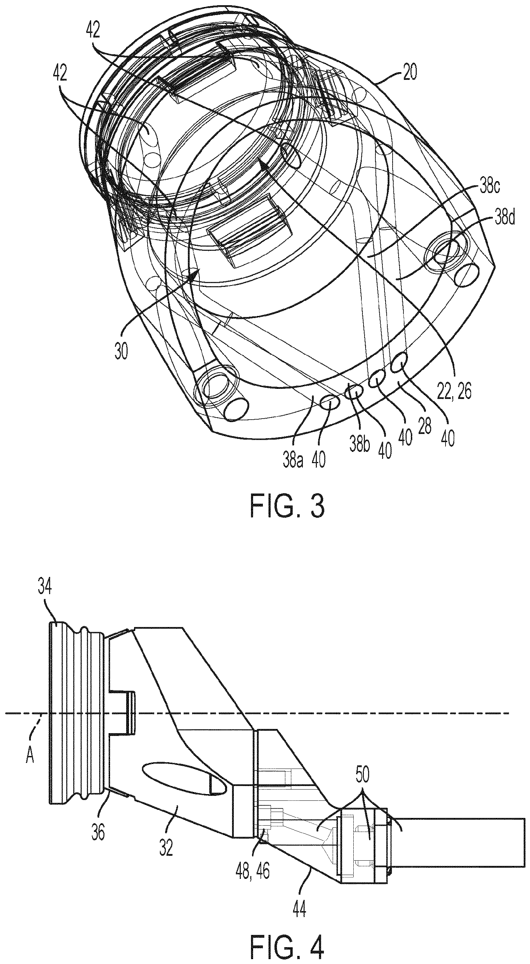

Fig. 3 is a perspective view of the base member of Fig. 2 with a first part, a second part and the protective gas supply channels.
Fig. 4 is a side view of the protective gas mouthpiece of Fig. 2.
Fig. 5A and Fig. 5B show a longitudinal section through the protective gas mouthpiece according to the invention in which the gas flow is schematically modelled. In Fig. 5A a fastener is in contact with a joining surface of the workpiece, whereas in Fig. 5B the fastener is lifted with regard to the joining surface of the workpiece.

On the different figures, the same reference signs designate identical or similar elements.

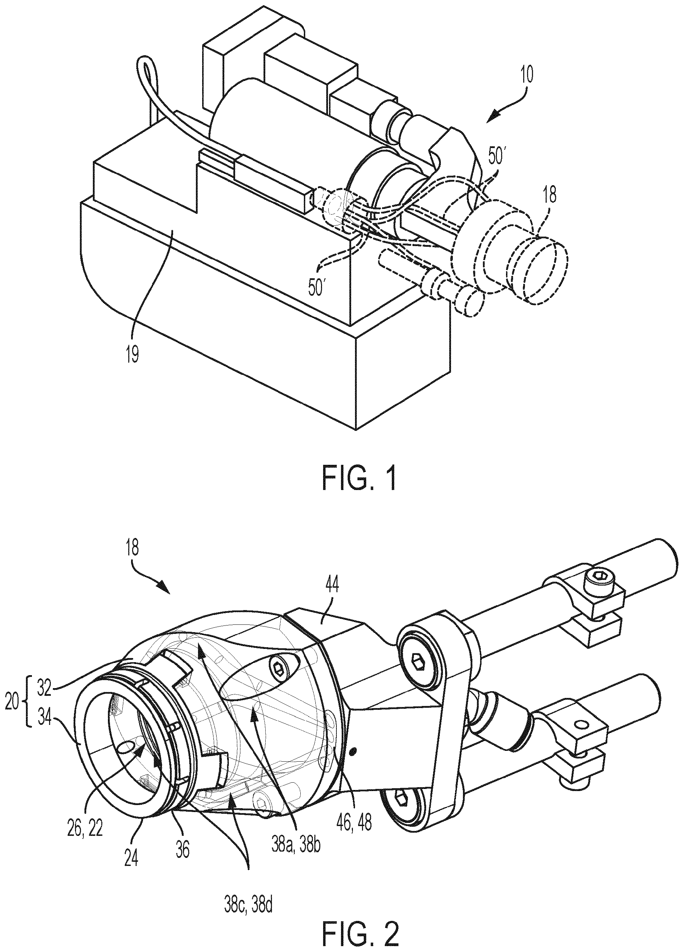

Fig. 1 shows a joining device 10 adapted for joining a fastener or connection element 12 to a workpiece 14. The fastener 12 is for instance a stud with a shaft and an enlarged flange, the flange being destined to be fastened to the workpiece. The joining device 10, as shown in Fig. 1 is more particularly an arc stud welding device. However, in other embodiments, the joining device 10 may also be a soldering or adhesive bonding device or the like.

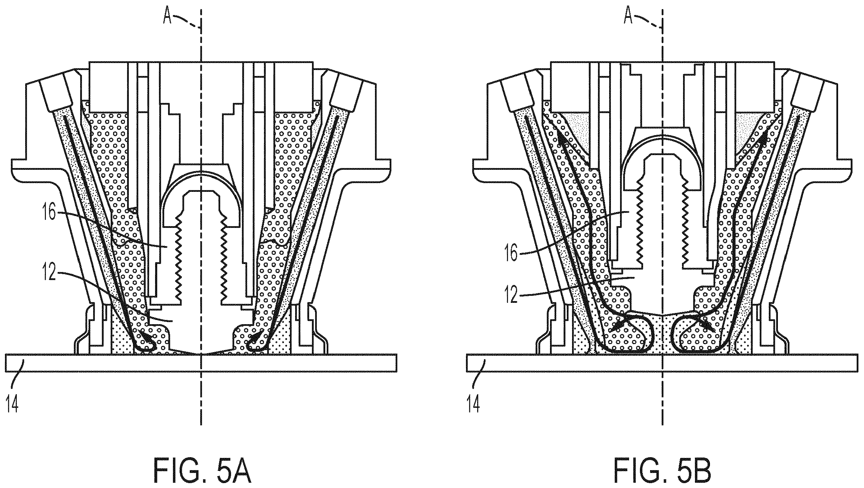

The joining device 10 in a well-known manner comprises a retention member 16 (see Fig. 5A or Fig. 5B) adapted to retain the fastener 12 which is intended to be connected to the workpiece 14. Via the retention member 16, there is optionally also supplied an electrical connection current which is used for the stud welding operation.

In a conventional stud welding process, the fastener 12 first is placed on a joining surface of a workpiece. Subsequently, a reduced electric current in the form of a pilot current is switched on. After that, the fastener 12 is raised from the workpiece so that an arc is drawn. Then, the electric current is increased to a welding current which may be greater than 1000 ampere. The mutually opposed faces of the fastener 12 and the workpiece thereby melt. Subsequently, the fastener 12 is lowered onto the workpiece 14, preferably as far as a location below the workpiece surface so that the electric current is short-circuited and switched off. Subsequently, the overall melt hardens so that a materially engaging connection is achieved between the fastener 12 and the workpiece 14. In order to carry out this joining process which is generally known, the retention member 16 can be axially moved along a longitudinal axis A in order to axially raise and lower the fastener 12 with respect to the workpiece 14. The stud welding process will not be further described here, as those skilled in the art understand and appreciate how stud welding process and arc stud welding devices operate.

The joining device 10 contains a protective gas mouthpiece 18 arranged at a front end of the joining device 10 and in such a manner that the retention member 16 can carry out relative movements with regard to the workpiece. The protective gas mouthpiece 18 is fixed to a housing 19 of the joining device 10. In dotted line in Fig. 1, it is shown the gas mouthpiece 18 and the necessary connectors according to the prior art. As visible in Fig. 1 the protective gas mouthpiece of the prior art is not compact, with several flexible hoses.

As seen in Fig. 2, the protective gas mouthpiece 18 according to the invention has a base member 20 partially defining an axial opening 22 extending along the longitudinal axis A and a mouth 24 arranged around the opening 22 and which can be placed onto the workpiece 14. The retention member 16 with a fastener 12 can be received inside the opening 22. The opening 22 adjacent to the mouth 24 defines a cleaning space 26 in which the protective gas can be introduced and which, when the joining process is carried out, is axially delimited by the workpiece which covers the opening 22. Protective gas can be supplied to the cleaning space 26 to displace ambient gas, such as air, from the cleaning space 26 in order to improve the above-described stud welding process.

The base member 20 comprises a flattened portion 28. The base member has a frustoconical shape with a flattened portion 28 and a notch 30 provided opposite the flattened portion. The flattened portion 28 allows a compact protective gas mouthpiece.

The base member 20 may be a two-parts piece. More particularly, the base member 20 comprises a first part 32 and a second part 34, the second part 34 being removably connected to the first part 32. The second part 34 is adapted to be placed onto a workpiece 14 and to contact the workpiece 14. The second part 34 has a sensibly annular shape. The first part 32 has a frustoconical shape with the flattened portion 28 and the notch 30 provided opposite the flattened portion 28.

The first part 32 is for instance connected to the second part 34 through a snap fit connection. Thus, the second part 34, more subject to wear, can easily be removed from the first part 32. For instance, a clip 36 may be provided between the first and second parts 32, 34 to connect both parts. Thus, the second part 34 easily can be released from the first part and can easily be replaced by a new second part if necessary.

The protective gas mouthpiece 18 is provided with protective gas supply channels 38a, 38b, 38c, 38d, each comprising an inlet 40 and an outlet 42 which opens into the cleaning space 26. The distribution of the protective gas over the periphery of the cleaning space is non-uniform so that no outlet is arranged in a peripheral portion which extends over more than 120°, and preferably over more 160°. The protective gas supply channel 38a, 38b, 38c, 38d are arranged in the first part 32of the base member 20, and partly extend within the flattened portion 28.

More particularly, four protective gas supply channels 38a, 38b, 38c, 38d are provided. First and second protective gas supply channels 38a, 38b have a mirror symmetry with third and fourth protective gas supply channels 38c, 38d. More particularly, first protective gas supply channel 38a has mirror symmetry with fourth protective gas supply channel 38d, and second protective gas supply channel 38b has mirror symmetry with third protective gas supply channel 38c.

For instance, the second and the third protective gas supply channels 38b, 38c each have a first straight portion connected to the inlet, a bent portion and a second straight portion connected to the outlet. The bent portion has a radius of curvature adapted to reduce interference when the protective gas flows through the channels.

First and fourth protective gas supply channels 38a, 38d each have a first straight portion, a bent portion and a second straight portion. There again, the bent portion has a radius of curvature adapted to reduce interference when the protective gas flows through the channels.

The first straight portions are arranged within the flattened portion.

The first protective gas supply channel 38a is longer than the second protective gas supply channel 38b. The outlets 42 of the first and fourth gas supply channels are diametrically opposed.

The protective gas mouthpiece 18 further comprises a gas distributor member 44 comprising a distribution chamber 46. The gas distributor member 44 extends from an end of the base member opposite the second part 34and for instance is attached to the rest of the housing 19 of the joining device 10. More particularly, the gas distributor member 44 connects the gas protective mouthpiece to the rest of the joining device. A screwed connection may be used to connect the gas distributor member 44 to the base member 20. The inlets 40 of all the protective gas supply channel opens directly in the distribution chamber 46. The distribution chamber 46 defines a cavity adapted to receive protective gas for its supply onto the protective gas supply channels 38a, 38b, 38c, 38d.

A resistance element 48 is arranged within the distribution chamber 46 and covers all the inlets 40. The resistance element 48 is for instance a sintered element. However, other resistance element as mentioned in the preamble of the description may also be used. The sintered element covering all gas channels at the inlet 40 ensures that all channels in the mouthpiece are supplied evenly with protective gas. Simulation has shown that the volume flows of the individual channels should be as equal as possible. For instance, the resistance element 48 occupied the entire cavity defined by the distribution chamber 46.

The inlets 40 are provided in the flattened portion 28 and extends in an inlet plane sensibly orthogonal to the longitudinal axis A. The inlets 40 are all arranged within a segment which extends on a portion which is less than 45° around the longitudinal axis A. Similarly, the distribution chamber 46 extends on a portion which is less than 45° around the longitudinal axis A. The distribution chamber 46 has sensibly a parallelepiped form. The inlets 40 are all arranged on a reduced surface. For instance the distance between the first and the last inlet is less than 20 mm, and more particularly around 12 mm.

The distribution chamber 46 is supplied by an individual supply connection 50 ( thus with a unique entry port). Besides, the distribution chamber 46 not being annular and having a reduced area, the protective gas is supplied sensibly evenly on the entire surface of the distribution chamber 46. As shown in Fig. 1, the mouthpiece according to the invention does not need a plurality of supply connection 50' (as seen in dotted line in Fig. 1). The compactness and maintenance of the joining device is thus improved.

The protective gas mouthpiece 18 and more particularly the first part 32 of the protective gas mouthpiece 18 is manufactured through 3D printing. 3D printing allows making protective gas supply channels exactly according to simulation models, without the limit of traditional manufacturing methods. In the present invention, the use of 3D printing for the protective gas mouthpiece and more particularly for the first part 32 of the protective gas mouthpiece 18 which integrate a particular design and geometry of the protective gas supply channels is particularly advantageous.

The supply of protective gas to the cleaning space 26 can be carried out when the joining process is started, that is to say, after the mouthpiece has been placed on the workpiece and the fastener 12 has also been placed on the workpiece surface 16. In this instance, the supply of protective gas takes place substantially when the joining process is carried out, that is to say, when the arc is drawn.

The area under the fastener 12 can be flushed (provided) with protective gas to reduce the oxygen content in this area to a minimum. The joining is sensibly improved if almost all the residual oxygen is removed. For instance, the fastener 12 is lifted a few millimeters from the workpiece during a pre-flow period (the period during which protective gas is supplied within the cleaning space) so that the area under the fastener 12 and between the flange of the fastener and the workpiece can be completely purged of protective gas. For the actual joining process (for the actual welding process), the fastener 12 is placed back on the workpiece 14 and the joining process is carried out.

Fig. 5A and Fig. 5B schematically show the cleaning space 26 during a cleaning step, in which the protective gas is supplied whilst. The different arrows show the protective gas flow within the cleaning space.

In Fig. 5A, the fastener contacts the workpiece during the cleaning process. A main flow direction is orientated in a substantially radial manner and this leads to a uniform distribution of the protective gas without any unexpected gas or air stream. Protective gas is discharged from the cleaning space 26 in an upward direction.

In Fig. 5B, the fastener 12 is slightly lifted from the workpiece 14, such that a spacing is produced. This leads, as shown by the simulated flow with many arrows, to a main flow direction which is orientated in a substantially radial manner, even under the fastener. Again, this leads to a uniform distribution of the protective gas without any unexpected gas or air stream. Fig. 5B is an alternative embodiment. A lift of the stud is not necessary. Protective gas is discharged from the cleaning space 26 in an upward direction.

## Claims

1. Protective gas mouthpiece (18) for a joining device, the protective gas mouthpiece (18) for supplying a protective gas during a connection process between a connecting element and a workpiece, the protective gas mouthpiece (18) comprising:
- a base member (20) partially defining an axial opening extending along a longitudinal axis (A) and a mouth (24) arranged around the opening (22) and which can be placed onto a workpiece, wherein the opening adjacent to the mouth defines a cleaning space (26) in which the protective gas can be introduced and which, when the joining process is carried out, is axially delimited by the workpiece which covers the opening (22),
- at least two protective gas supply channels (38a, 38b, 38c, 38d) are arranged within the base member (20) and directed into the cleaning space, each protective gas supply channel comprising an inlet and an outlet which opens into the cleaning space, the distribution of the protective gas supply over the periphery of the cleaning space being non-uniform so that no outlet is arranged in a peripheral portion which extends over more than 120°, and preferably over more 160°, and
- a gas distributor member (44) comprising a distribution chamber (46), the inlets (40) of all the protective gas supply channels opening into the distribution chamber, the gas distributor member extending from an end of the base member (20) opposite the mouth,
wherein the base member comprises a flattened portion and a frustroconical shape,
**characterized in that** the base member (20) further comprises a notch (30) provided opposite the flattened portion (28),
wherein the inlets (40) are arranged on the flattened portion (28) and the gas distributor member (44) is fixed to the flattened portion (28), and wherein each protective gas supply channel (38a, 38b, 38c, 38d) comprises at least one straight portion and one bent portion such that an interfering contour for the gas flow is significantly reduced.

2. Protective gas mouthpiece (18) comprising exactly four protective gas supply channels (38a, 38b, 38c, 38d), and wherein the outlets of the first and fourth gas supply channels are diametrically opposed.

3. Protective gas mouthpiece (18) according to claim 1 or claim 2, wherein the base member (20) comprises a median plan and the first and second gas supply channels are in mirror symmetry with the third and fourth gas supply channels along the median plan.

4. Protective gas mouthpiece (18) according to any of claims 1 to 3, wherein the distribution chamber (46) is connected to a unique entry port through which protective gas can be supplied.

5. Protective gas mouthpiece (18) according to claim 4, wherein a resistance element (48) is arranged in the distribution chamber, and wherein the resistance element covers all the inlets (40).

6. Protective gas mouthpiece (18) according to claim 5, wherein the resistance element (48) is a sintered element.

7. Protective gas mouthpiece (18) according to any of claims 1 to 6, wherein the base member (20) comprises a first part and a second part (32, 34), the second part (34) being removably connected to the first part (32), wherein the second part is adapted to be placed onto a workpiece and to connect the workpiece, wherein the gas supply channels are arranged in the first part.

8. Protective gas mouthpiece (18) according to claim 7, wherein the first part (32) is made by 3D-printing.

9. Protective gas mouthpiece (18) according to any of claims 1 to 8, wherein the inlets are arranged on a segment of the flattened portion (28), on the same plane, and wherein the segment is smaller than one fourth of the length of the flattened portion in said plane.

10. Protective gas mouthpiece according to claim 9, wherein the length of the distribution chamber (46) around longitudinal axis is sensibly the same than the length of the segment.

11. Joining device for performing a joining process between a fastener and a workpiece comprising a connection element retention device (16), being **characterised by**
further comprising a protective gas mouthpiece (18) according to any of claims 1 to 10, wherein the protective gas mouthpiece surrounds the connection element retention device (16).

12. Method for carrying out a welding process using protective gas by means of a protective gas mouthpiece (18), being **characterised by** comprising the steps of:
- axially placing a protective gas mouthpiece according (18) to any of claims 1 to 10, on a workpiece (14), wherein inside the protective gas mouthpiece a fastener (12) is arranged so as to be able to be axially offset with respect to the protective gas mouthpiece (18),
- raising the fastener (12) from the workpiece so that an intermediate space is released between the connection element and the workpiece (14),
- supplying protective gas to the intermediate space.

## Patentansprüche

1. Schutzgasmundstück (18) für eine Verbindungsvorrichtung, wobei das Schutzgasmundstück (18) zum Zuführen eines Schutzgases während eines Verbindungsprozesses zwischen einem Verbindungselement und einem Werkstück dient, wobei das Schutzgasmundstück (18) umfasst:
- ein Basiselement (20), welches teilweise eine axiale Öffnung, welche sich entlang einer Längsachse (A) erstreckt, und eine um die Öffnung (22) herum angeordnete Mündung (24) definiert, und welches auf einem Werkstück platziert werden kann, wobei die Öffnung benachbart zu der Mündung einen Reinigungsraum (26) definiert, in welchen das Schutzgas eingeleitet werden kann und welcher beim Durchführen des Verbindungsprozesses durch das Werkstück, welches die Öffnung (22) abdeckt, axial begrenzt ist,
- zumindest zwei Schutzgaszufuhrkanäle (38a, 38b, 38c, 38d), welche innerhalb des Basiselements (20) angeordnet und in den Reinigungsraum gerichtet sind, wobei jeder Schutzgaszufuhrkanal einen Einlass und einen Auslass umfasst, welcher in den Reinigungsraum mündet, wobei die Verteilung der Schutzgaszufuhr über den Umfang des Reinigungsraums ungleichmäßig ist, sodass kein Auslass in einem Umfangsabschnitt angeordnet ist, welcher sich über mehr als 120° und bevorzugt über mehr als 160° erstreckt, und
- ein Gasverteilerelement (44), welches eine Verteilungskammer (46) umfasst, wobei die Einlässe (40) aller Schutzgaszufuhrkanäle in die Verteilungskammer münden, wobei sich das Gasverteilerelement von einem der Mündung gegenüberliegenden Ende des Basiselements (20) erstreckt,
wobei das Basiselement einen abgeflachten Abschnitt und eine kegelstumpfförmige Form umfasst,
**dadurch gekennzeichnet, dass** das Basiselement (20) weiter eine Kerbe (30) umfasst, welche gegenüber dem abgeflachten Abschnitt (28) bereitgestellt ist,
wobei die Einlässe (40) an dem abgeflachten Abschnitt (28) angeordnet sind und das Gasverteilerelement (44) an dem abgeflachten Abschnitt (28) befestigt ist, und wobei jeder Schutzgaszufuhrkanal (38a, 38b, 38c, 38d) zumindest einen geraden Abschnitt und einen gebogenen Abschnitt umfasst, sodass eine Störkontur für die Gasströmung deutlich reduziert ist.

2. Schutzgasmundstück (18), welches genau vier Schutzgaszufuhrkanäle (38a, 38b, 38c, 38d) umfasst, und wobei die Auslässe des ersten und vierten Gaszufuhrkanals einander diametral gegenüberliegen.

3. Schutzgasmundstück (18) nach Anspruch 1 oder Anspruch 2, wobei das Basiselement (20) eine Mittelebene umfasst und der erste und der zweite Gaszufuhrkanal entlang der Mittelebene spiegelsymmetrisch zu dem dritten und vierten Gaszufuhrkanal angeordnet sind.

4. Schutzgasmundstück (18) nach einem der Ansprüche 1 bis 3, wobei die Verteilungskammer (46) mit einer einzigen Eingangsöffnung verbunden ist, durch welche Schutzgas zugeführt werden kann.

5. Schutzgasmundstück (18) nach Anspruch 4, wobei in der Verteilungskammer ein Widerstandselement (48) angeordnet ist, und wobei das Widerstandselement alle Einlässe (40) abdeckt.

6. Schutzgasmundstück (18) nach Anspruch 5, wobei das Widerstandselement (48) ein Sinterelement ist.

7. Schutzgasmundstück (18) nach einem der Ansprüche 1 bis 6, wobei das Basiselement (20) einen ersten Teil und einen zweiten Teil (32, 34) umfasst, wobei der zweite Teil (34) abnehmbar mit dem ersten Teil (32) verbunden ist, wobei der zweite Teil dazu angepasst ist, auf einem Werkstück platziert und mit dem Werkstück verbunden zu werden, wobei die Gaszufuhrkanäle in dem ersten Teil angeordnet sind.

8. Schutzgasmundstück (18) nach Anspruch 7, wobei der erste Teil (32) im 3D-Druckverfahren hergestellt ist.

9. Schutzgasmundstück (18) nach einem der Ansprüche 1 bis 8, wobei die Einlässe auf einem Segment des abgeflachten Abschnitts (28) auf derselben Ebene angeordnet sind, und wobei das Segment kleiner ist als ein Viertel der Länge des abgeflachten Abschnitts in der Ebene.

10. Schutzgasmundstück nach Anspruch 9, wobei die Länge der Verteilungskammer (46) um die Längsachse herum sinnvollerweise gleich der Länge des Segments ist.

11. Verbindungsvorrichtung zum Durchführen eines Verbindungsprozesses zwischen einem Befestigungselement und einem Werkstück, umfassend eine Verbindungselementhaltevorrichtung (16), **dadurch gekennzeichnet, dass** sie
weiter ein Schutzgasmundstück (18) nach einem der Ansprüche 1 bis 10 umfasst, wobei das Schutzgasmundstück die Verbindungselementhaltevorrichtung (16) umgibt.

12. Verfahren zum Durchführen eines Schweißprozesses unter Verwendung von Schutzgas mittels eines Schutzgasmundstücks (18), welches **dadurch gekennzeichnet ist, dass** es die folgenden Schritte umfasst:
- axiales Platzieren eines Schutzgasmundstücks (18) nach einem der Ansprüche 1 bis 10 auf einem Werkstück (14), wobei im Inneren des Schutzgasmundstücks ein Befestigungselement (12) so angeordnet ist, dass es in Bezug auf das Schutzgasmundstück (18) axial verschiebbar ist,
- Abheben des Befestigungselements (12) von dem Werkstück, sodass ein Zwischenraum zwischen dem Verbindungselement und dem Werkstück (14) freigegeben wird,
- Zuführen von Schutzgas in den Zwischenraum.

## Revendications

1. Embout de gaz de protection (18) pour un dispositif d'assemblage, l'embout de gaz de protection (18) étant destiné à fournir un gaz de protection pendant un processus de connexion entre un élément de connexion et une pièce à travailler, l'embout de gaz de protection (18) comprenant :
- un élément de base (20) définissant partiellement une ouverture axiale s'étendant le long d'un axe longitudinal (A) et une bouche (24) agencée autour de l'ouverture (22) et qui peut être placée sur une pièce à travailler, dans lequel l'ouverture adjacente à la bouche définit un espace de nettoyage (26) dans lequel le gaz de protection peut être introduit et qui, lorsque le processus d'assemblage est effectué, est délimité axialement par la pièce à travailler qui recouvre l'ouverture (22),
- au moins deux canaux d'alimentation en gaz de protection (38a, 38b, 38c, 38d) sont agencés à l'intérieur de l'élément de base (20) et dirigés dans l'espace de nettoyage, chaque canal d'alimentation en gaz de protection comprenant une entrée et une sortie qui s'ouvre dans l'espace de nettoyage, la répartition de l'alimentation en gaz de protection sur la périphérie de l'espace de nettoyage n'étant pas uniforme, de telle sorte qu'aucune sortie ne soit agencée dans une partie périphérique qui s'étend sur plus de 120°, et de préférence sur plus de 160°, et
- un élément distributeur de gaz (44) comprenant une chambre de distribution (46), les entrées (40) de tous les canaux d'alimentation en gaz de protection débouchant dans la chambre de distribution, l'élément distributeur de gaz s'étendant depuis une extrémité de l'élément de base (20) à l'opposé de la bouche,
dans lequel l'élément de base comprend une partie aplatie et une forme tronconique,
**caractérisé en ce que** l'élément de base (20) comprend en outre une encoche (30) disposée à l'opposé de la partie aplatie (28),
dans lequel les entrées(40) sont agencées sur la partie aplatie (28) et l'élément distributeur de gaz (44) est fixé à la partie aplatie (28) et dans lequel chaque canal d'alimentation en gaz de protection (38a, 38b, 38c, 38d) comprend au moins une partie droite et une partie courbée, de telle sorte qu'un contour gênant pour l'écoulement de gaz soit considérablement réduit.

2. Embout de gaz de protection (18) comprenant exactement quatre canaux d'alimentation en gaz de protection (38a, 38b, 38c, 38d) et dans lequel les sorties des premier et quatrième canaux d'alimentation en gaz sont diamétralement opposées.

3. Embout de gaz de protection (18) selon la revendication 1 ou la revendication 2, dans lequel l'élément de base (20) comprend un plan médian et les premier et deuxième canaux d'alimentation en gaz sont en symétrie miroir avec les troisième et quatrième canaux d'alimentation en gaz le long du plan médian.

4. Embout de gaz de protection (18) selon l'une quelconque des revendications 1 à 3, dans lequel la chambre de distribution (46) est reliée à un port d'entrée unique à travers lequel le gaz de protection peut être fourni.

5. Embout de gaz de protection (18) selon la revendication 4, dans lequel un élément de résistance (48) est agencé dans la chambre de distribution et dans lequel l'élément de résistance recouvre toutes les entrées (40).

6. Embout de gaz de protection (18) selon la revendication 5, dans lequel l'élément de résistance (48) est un élément fritté.

7. Embout de gaz de protection (18) selon l'une quelconque des revendications 1 à 6, dans lequel l'élément de base (20) comprend une première partie et une seconde partie (32, 34), la seconde partie (34) étant raccordée de manière amovible à la première partie (32), dans lequel la seconde partie est adaptée pour être placée sur une pièce à travailler et pour raccorder la pièce à travailler, dans lequel les canaux d'alimentation en gaz sont agencés dans la première partie.

8. Embout de gaz de protection (18) selon la revendication 7, dans lequel la première partie (32) est réalisée par une impression 3D.

9. Embout de gaz de protection (18) selon l'une quelconque des revendications 1 à 8, dans lequel les entrées sont agencées sur un segment de la partie aplatie (28), sur le même plan, et dans lequel le segment est plus petit qu'un quart de la longueur de la partie aplatie dans ledit plan.

10. Embout de gaz de protection selon la revendication 9, dans lequel la longueur de la chambre de distribution (46) autour de l'axe longitudinal est sensiblement la même que la longueur du segment.

11. Dispositif d'assemblage pour effectuer un processus d'assemblage entre une fixation et une pièce à travailler, comprenant un dispositif de retenue d'élément de connexion (16), **caractérisé**
**en ce qu'**il comprend en outre un embout de gaz de protection (18) selon l'une quelconque des revendications 1 à 10, dans lequel l'embout de gaz de protection entoure le dispositif de retenue d'élément de connexion (16).

12. Procédé pour réaliser un processus de soudage en utilisant un gaz de protection au moyen d'un embout de gaz de protection (18), **caractérisé en ce qu'**il comprend les étapes consistant à :
- placer axialement un embout de gaz de protection (18) selon l'une quelconque des revendications 1 à 10 sur une pièce à travailler (14), dans lequel une fixation (12) est agencée à l'intérieur de l'embout de gaz de protection de manière à pouvoir être décalée axialement par rapport à l'embout de gaz de protection (18),
- lever la fixation (12) de la pièce à travailler de telle sorte qu'un espace intermédiaire soit libéré entre l'élément de connexion et la pièce à travailler (14),
- fournir un gaz de protection à l'espace intermédiaire.
